Europäisches Patentamt

(19) European Patent Office

Office européen des brevets

(11) Numéro de publication: **0 1 1 4 6 6 7**
**B1**

(12) **FASCICULE DE BREVET EUROPEEN**

(45) Date de publication du fascicule du brevet:
**01.06.88**

(51) Int. Cl.⁴: **H 01 M 6/46,** H 01 M 6/38

(21) Numéro de dépôt: **84100531.7**

(22) Date de dépôt: **19.01.84**

(54) **Générateur électrochimique de type bouton.**

(30) Priorité: **21.01.83 FR 8300903**

(43) Date de publication de la demande:
**01.08.84 Bulletin 84/31**

(45) Mention de la délivrance du brevet:
**01.06.88 Bulletin 88/22**

(84) Etats contractants désignés:
**DE FR GB IT SE**

(56) Documents cités:
**FR - A - 1 024 163**
**FR - A - 1 497 405**
**FR - A - 2 471 674**
**GB - A - 1 209 336**
**US - A - 3 094 438**
**US - A - 3 148 090**
**US - A - 3 445 295**

(73) Titulaire: **Société Anonyme dite SAFT, 156, avenue de Metz, F-93230 Romainville (FR)**

(72) Inventeur: **Descroix, Jean-Pierre, 16bis rue de Neuilly, F-94120 Fontenay Sous Bois (FR)**
Inventeur: **Evereare, Christian, 76, avenue d'Estienne d'Orves, F-94340 Joinville Le Pont (FR)**
Inventeur: **Racine, Guy, 21, Allée Paul Eluard, F-77270 Villeparisis (FR)**

(74) Mandataire: **Weinmiller, Jürgen et al, Lennéstrasse 9 Postfach 24, D-8133 Feldafing (DE)**

## Description

La présente invention concerne une pile amorçable de type bouton, selon le préambule de la revendication 1.

Généralement le boîtier est formé d'un bac et d'un couvercle portant ou formant une sortie de courant d'une polarité, le bac constituant la sortie de courant de la polarité opposée. Les électrodes, par exemple en forme de disques, sont en général reliées aux sorties de courant par l'intermédiaire de clinquants, le plus souvent soudés.

Ce mode de liaison présente deux inconvénients principaux. Tout d'abord la multiplication des soudures complique la réalisation des éléments et abaisse le niveau de fiabilité. Par ailleurs les électrodes ne sont pas immobilisées dans le boîtier vis-à-vis de leurs connexions électriques et la tenue mécanique du générateur électrochimique ne peut être garantie dans des conditions sévères d'utilisation (chocs, fortes accélérations, niveaux de vibrations élevés, etc.).

On connaît par le brevet américain USP 3 094 438 un générateur électrochimique de type bouton à tenue mécanique améliorée et dont les différents éléments sont montés en parallèles.

Les électrodes présentent chacune deux ouvertures circulaires, l'une de grand diamètre, l'autre de petit diamètre. Cette dernière est obtenue par introduction d'un oeillet métallique dans une ouverture de grand diamètre. Les plaques sont enfilées sur deux axes métalliques parallèles dont les extrémités constituent les bornes positive et négative du générateur. La liaison électrique entre les plaques et l'axe d'une polarité donnée est réalisée par un enfilage à force au niveau des oeillets.

La présente invention a pour but de réaliser une pile amorçable dont la structure permette un montage beaucoup plus simple des éléments aussi bien en parallèle qu'en série, cette structure étant bien entendu capable de fonctionner dans les conditions précisées plus haut.

Ce but est atteint par la pile amorçable telle qu'elle est définie dans la partie caractéristique de la revendication 1.

L'invention sera décrite ci-après à l'aide du dessin annexé donné à titre illustratif mais nullement limitatif et dans lequel:

– la figure 1 montre très schématiquement en coupe partielle une pile amorçable selon l'invention,

– la figure 2 montre très schématiquement en vue de dessus une plaque collectrice appartenant à une électrode de la pile de la figure 1.

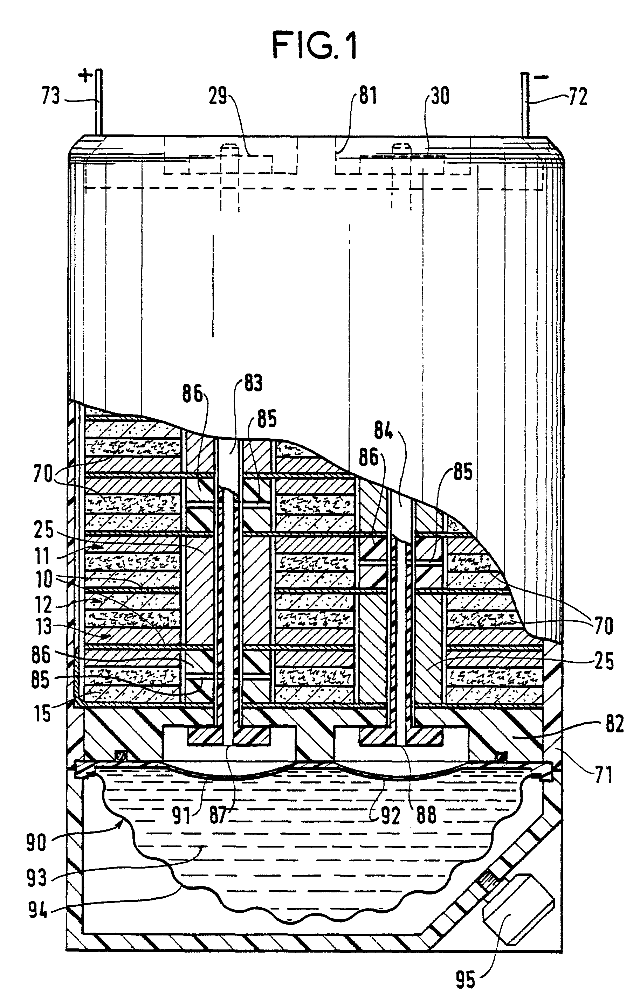

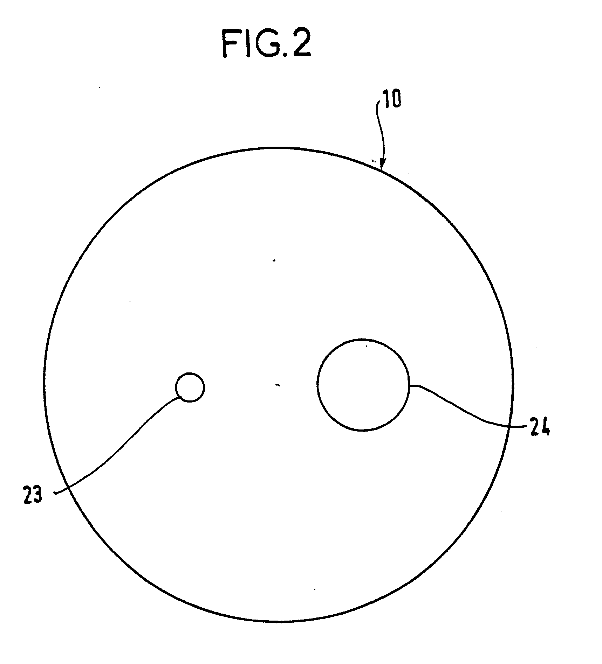

On voit sur la figure 1 une pile à plusieurs éléments reliés en série. Ces éléments comportent une pluralité d'électrodes formées d'une plaque métallique collectrice de courant 10, apparaissant en vue de dessus sur la figure 2, revêtue de matière active sur au moins l'une de ses faces.

Ainsi au bas de la pile, l'empilage est constitué d'une anode biface 11, d'une cathode biface 12, d'une anode biface 13 et d'une électrode terminale 15 qui est une cathode monoface.

Toutes ces électrodes et les séparateurs 70 qui sont intercalés entre elles sont enfilés sur deux axes parallèles 83, 84. Cela est rendu possible grâce à des ouvertures 23, 24 prévues dans les plaques 10 (voir figure 2). Afin de maintenir un écartement adéquat entre les électrodes, on dispose entre elles des bagues intercalaires 25 et 86; les bagues 25 sont métalliques et leurs faces extrêmes s'appuient sur des zones annulaires des plaques collectrices 10 pour relier électriquement les électrodes correspondantes. Les bagues 86 sont isolantes.

L'empilage complet est maintenu entre deux brides extrêmes métalliques 81, 82 et serré, par exemple à l'aide d'écrous 29 et 30, sur des axes isolants 83, 84.

Ces axes sont creux et communiquent avec des canaux de distribution d'électrolyte 85 ménagés dans les rondelles isolantes 86. Les extrémités 87 et 88 des axes sont susceptibles de communiquer avec un réservoir d'électrolyte d'amorçage 90.

On a référencé 91 et 92 les parois frangibles de la chambre contenant l'électrolyte 93; cette chambre est par ailleurs délimitée par une paroi métallique déformable 94 susceptible de venir s'écraser contre la bride 82 sous l'effet d'un jet de gaz issu du réservoir 85.

L'isolement latéral de l'empilage est assuré par une gaine plastique surmoulée 71; cette gaine peut être éventuellement remplacée par un ensemble de joints annulaires superposés et serrés les uns contre les autres, par exemple en polytétrafluoréthylène. On a référencé 72 et 73 les connexions terminales négative et positive.

On obtient ainsi un ensemble présentant une bonne résistance mécanique même dans des conditions d'utilisation très critiques. Cet ensemble est immobilisé dans un boîtier métallique de manière connue en soi.

A titre d'exemple, l'invention peut s'appliquer aux piles Nickel-Cadmium. Elle peut s'appliquer aussi aux piles Lithium-Chlorure de Thionyle. Dans ce cas les plaques collectrices sont en nickel et les cathodes sont en carbone lié par du polytétrafluoréthylène. Les rondelles conductrices peuvent être en nickel et les rondelles isolantes en polytétrafluoréthylène.

## Revendications

1. Pile amorçable de type bouton comportant, dans un boîtier muni d'une borne positive et d'une borne négative, un empilage d'éléments constitués par des séparateurs (70) et des électrodes formées d'une plaque métallique collectrice (10) dont au moins une face est enduite de matière active positive ou négative, chaque plaque présentant au moins deux ouvertures par lesquelles elles sont enfilées respectivement sur deux axes parallèles entre eux, des bagues intercalaires maintenant entre les plaques (10) l'intervalle souhaité s'appuyant sur des portions de plaques, une bague étant choisie conductrice (25) ou isolante (86) selon qu'elle doive ou non assurer la liaison électrique entre les deux électrodes correspondantes, et un moyen de blocage longitudinal des plaques (10) et des bagues (25, 86) étant prévu sur chacun desdits axes, caractérisée par le fait que lesdits axes (83, 84) sont en matière isolante, qu'ils sont creux, qu'ils débouchent latéralement dans des canaux (85) de distribution d'électrolyte prévu dans les bagues intercalaires isolantes (86) et qu'ils sont susceptibles, à une de leurs extrémités (87, 88) de communiquer avec un réservoir d'électrolyte d'amorçage (90).

2. Pile amorcable selon la revendication 1, caractérisée par le fait que les tranches dudit empilage sont noyées dans une gaine plastique surmoulée (71).

## Claims

1. A button-type activatable battery comprising, in a housing provided with a positive terminal and a negative terminal, a stack of components constituted by separators (70) and electrodes each constituted by a current collecting metal plate (10) having at least one of its faces coated with a positive or a negative active material, each plate having at least two openings via which the plates are threaded over two mutually parallel shafts, intermediate rings maintaining the desired gaps between the plates (10) by pressing against portions of the plates, with each ring being selected to be a conducting ring (25) or an insulation ring (86) depending on whether the ring is required to provide an electrical connection between the two electrodes corresponding thereto, and longitudinal locking means being provided on each of said shafts for locking said plates (10) and rings (25, 86), the battery being characterized by the fact that said shafts (83, 84) are made of insulating material, that they are hollow, that they open out sideways into electrolyte distribution channels (85) provided in the insulating intermediate rings (86), and that they are capable at one of their ends (87, 88) of communicating with a tank (90) of activating electrolyte.

2. An activatable battery according to claim 1, characterized by the fact that the layers of said stack are embedded in a plastic sheath (71) which is molded thereover.

## Patentansprüche

1. Knopfförmige aktivierbare Zelle, die in einem einen positiven und einen negativen Pol aufweisenden Gehäuse einen Stapel von Elementen aufweist, die aus Separatoren (70) und Elektroden bestehen, welche von einer metallischen Kollektorplatte (10) gebildet werden, wobei mindestens eine Seite jeder Platte mit positivem oder negativem aktivem Material beschichtet ist und jede Platte mindestens zwei Öffnungen besitzt, mit denen sie auf zwei zueinander parallele Achsen aufgereiht sind, wobei Zwischenringe zwischen den Platten unter Abstützung auf Abschnitten derselben den gewünschten Abstand halten und wobei ein Ring leitend (25) oder isolierend (86) ausgebildet ist, je nachdem, ob er die elektrische Verbindung zwischen zwei entsprechenden Platten herstellen soll oder nicht, und wobei auf jeder Achse (83, 84) ein Mittel zur Blockierung der Platten (10) und Ringe (25, 86) in Längsrichtung vorgesehen ist, dadurch gekennzeichnet, dass die Achsen (83, 84) aus Isoliermaterial bestehen, hohl sind, seitlich in Verteilerkanäle (85) für den Elektrolyten münden, die in den isolierenden Zwischenringen (86) angebracht sind, und dass sie imstande sind, mit einem Ende (87, 88) mit einem Reservoir (90) des aktivierbaren Elektrolyten in Verbindung zu treten.

2. Aktivierbare Zelle nach Anspruch 1, dadurch gekennzeichnet, dass die Scheiben des Stapels in eine umgossene Kunststoffhülle gebettet ist.

FIG.1

# FIG.2